# EUROPÄISCHE PATENTSCHRIFT

(11) **EP 1 797 232 B1**
(45) Veröffentlichungstag und Bekanntmachung des Hinweises auf die Patenterteilung: **11.09.2013**
(21) Anmeldenummer: 05801278.2
(22) Anmeldetag: 30.09.2005
(51) Int. Cl.: D06F 37/20

(54) **REIBUNGSDÄMPFEREINRICHTUNG FÜR EINE WASCHMACHINE**
FRICTION DAMPER DEVICE FOR A WASHING MACHINE
AMORTISSEUR A FRICTION DESTINE A UN LAVE-LINGE

(30) Priorität: 01.10.2004 DE 102004047999
(43) Veröffentlichungstag der Anmeldung: 20.06.2007
(73) Patentinhaber: BSH Bosch und Siemens Hausgeräte GmbH, 81739 München (DE)
(72) Erfinder: SCHUCK, Rolf, 14197 Berlin (DE); ACKERMANN, Uwe, 14621 Schönwalde (DE); BOHM, Andreas, 13503 Berlin (DE)
(86) Internationale Anmeldenummer: PCT/EP2005/054958
(87) Internationale Veröffentlichungsnummer: WO 2006/037767

(56) Entgegenhaltungen:
- DE-A1- 3 016 915
- DE-A1- 3 626 065
- PATENT ABSTRACTS OF JAPAN Bd. 017, Nr. 243 (C-1058), 17. Mai 1993 (1993-05-17) -& JP 04 371194 A (MATSUSHITA ELECTRIC IND CO LTD), 24. Dezember 1992 (1992-12-24)

## Beschreibung

Die vorliegende Erfindung betrifft eine Reibungsdämpfereinrichtung für eine Waschmaschine, in deren Gehäuse ein Waschaggregat mit einem Laugenbehälter, einer in dem Laugenbehälter drehbar gelagerten Wäschetrommel und einem Antrieb für die Wäschetrommel angeordnet ist, wobei das Waschaggregat durch wenigstens einen, eine Kolbenstange aufweisenden Dämpfer federnd gegen ein unteres Rahmenteil des Gehäuses abgestützt ist.

Im Zusammenhang mit Waschmaschinen sind verschienartige Systeme zur Lagerung des Waschaggregates, das aus einem Laugenbehälter, einem Antrieb für den Laugenbehälter und einer Wäschetrommel besteht, bekannt. Bei sogenannten aufgeständerten Systemen ist das Waschaggregat üblicherweise über mehrere Federbeine in Bezug auf ein unteres Rahmenteil des Gehäuses der Waschmaschine federnd gelagert. Bei sogenannten aufgehängten Systemen, das sind Mischsysteme, ist das Waschaggregat an mehreren Punkten mit der Hilfe von Federn an einem oberen Rahmenteil des Gehäuses aufgehängt und mit der Hilfe von Dämpfern in Bezug auf ein unteres Rahmenteil des Gehäuses hinsichtlich der Schwingungen gedämpft gelagert.

Aus der DE 30 43 550 C2 geht eine zum Schleudern eingerichtete vollautomatische Trommelwaschmaschine hervor, deren Waschaggregat über federnde und dämpfende Federbeine gegen den Maschinenboden abgestützt ist. Jedes Federbein ist an seinem unteren Ende mit der Hilfe von zwei Gummironden am Gehäuserahmen der Waschmaschine befestigt, die zwischen sich eine Bodenplatte des Gehäuserahmens einspannen. Von oben gerichtete Kräfte werden auf die obere Gummironde und von unten gerichtete Kräfte auf die untere Gummironde übertragen.

In der DE 36 26 065 C2 ist eine Reibungsdämpfereinrichtung für eine Waschmaschine beschrieben, deren Waschaggregat freischwingend mit der Hilfe von Zugfedern am Gehäuse aufgehängt ist. Zwischen dem Laugenbehälter und der Bodenplatte der Waschmaschine sind Reibungsdämpfereinrichtungen vorgesehen, deren Aufgabe darin besteht, beim Betrieb der Waschmaschine, insbesondere beim Durchlaufen der kritischen Drehzahl, wenn die Wäschetrommel von einer niedrigen Waschdrehzahl auf eine hohe Schleuderdrehzahl beschleunigt wird, Unwuchtschwingungen des Waschaggregates zu dämpfen. Hierzu weist jede Reibungsdämpfereinrichtung eine an dem Laugenbehälter befestigte Reibungsplatte auf, gegen die von gegenüberliegenden Seiten paarweise Reibungsbeläge von Reibungsköpfen gedrückt werden, die jeweils an einem Arm eines Spann- und Haltebügels befestigt sind. An den Armen der Spann- und Haltebügel, die die Reibungsbeläge normalerweise gegen die Reibungsplatte pressen, greift ein motorischer Reibungsunterbrecher an, der die Reibungsköpfe gegen die Vorspannkraft der Spann- und Haltebügel auseinander drücken kann. Der Reibungsunterbrecher ist als ein mit einem Druckfluid beaufschlagbarer Kolben/Zylinder-Antrieb ausgebildet. Alternativ kann der Reibungsunterbrecher einen Elektromotor und eine Verstellspindel umfassen. Somit können nach Durchlaufen der kritischen Drehzahl die Dämpfungskräfte der Reibungsdämpfereinrichtung aufgehoben werden.

Die Aufgabe der vorliegenden Erfindung besteht darin, eine relativ einfach aufgebaute und einen sicheren Betrieb der Waschmaschine gewährleistende Reibungsdämpfereinrichtung zu schaffen.

Diese Aufgabe wird durch eine Reibungsdämpfereinrichtung für eine Waschmaschine mit den Merkmalen des Patentanspruches 1 gelöst. Vorteilhafte Ausgestaltungen der Erfindung gehen aus den Unteransprüchen hervor.

Der wesentliche Vorteil besteht darin, dass die vorliegende Reibungsdämpfereinrichtung relativ einfach aufgebaut und daher kostengünstig herstellbar ist. Ein weiterer Vorteil der Erfindung besteht darin, dass bei einem plötzlichen Stromausfall, beispielsweise bei einem versehentlichen Abschalten der Waschmaschine während ihres Betriebes, die erfindungsgemäße Reibungsdämpfereinrichtung sofort und automatisch wieder ihre Dämpferkraft entfaltet und somit ein sicheres "Durchlaufen" des unteren Drehzahlbereiches bis zum Stillstand gewährleistet ist. Die vorliegende Reibungsdämpfungseinrichtung ist insbesondere in einem Drehzahlbereich der Wäschetrommel von etwa 0 bis 300 U/min, in dem auch der Resonanzbereich für den Schleuderhochlauf liegt, wirksam schaltbar. Oberhalb dieses Bereiches, d.h. also im Schleuderlauf, stören die Dämpferkräfte das Schwingverhalten des Waschaggregates nicht, weshalb die vorliegende Reibungsdämpfereinrichtung elektrisch entweder ganz abschaltbar oder so schaltbar ist, dass ihre Dämpferkraft verringert wird. Das Schwingverhalten der gesamten Waschmaschine wird dadurch wesentlich verbessert. Insbesondere wird das Vibrationsverhalten des Gesamtgerätes verbessert und werden Geräusche verringert.

Die vorliegende Reibungsdämpfereinrichtung wird dann, wenn der obere Drehzahlbereich des Schleuderlaufes verlassen wird, so geschaltet, dass ihre Dämpfungswirkung wieder eintritt.

Vorteilhafterweise ist die vorliegende Reibungsdämpfereinrichtung bei aufgeständerten und aufgehängten Systemen, wie auch bei Mischsystemen einsetzbar.

Im Folgenden wird die Erfindung anhand der Zeichnung näher erläutert, in der vorteilhafte Ausführungsbeispiele dargestellt sind. Es zeigen
- Fig. 1: in schematischer Darstellung eine Prinzipdarstellung einer möglichen Aufhängung des Waschaggregates einer Waschmaschine,
- Fig. 2: eine Seitenansicht der erfindungsgemäßen Reibungsdämpfereinrichtung,
- Fig. 3: einen Schnitt durch die erfindungsgemäße Reibungsdämpfereinrichtung entlang der Linie III-III der Figur 2,
- Fig. 4: eine weitere Ausführungsform der erfindungsgemäßen Reibungs-Dämpfereinrichtung,
- Fig. 5: einen Schnitt entlang der Linie V-V der Ausführungsform der erfindungsgemäßen Reibungs-Dämpfereinrichtung der Figur 4 und
- Fig. 6: eine Weiterbildung der Ausführungsform der erfindungsgemäßen Reibungs-Dämpfereinrichtung der Figur 4.

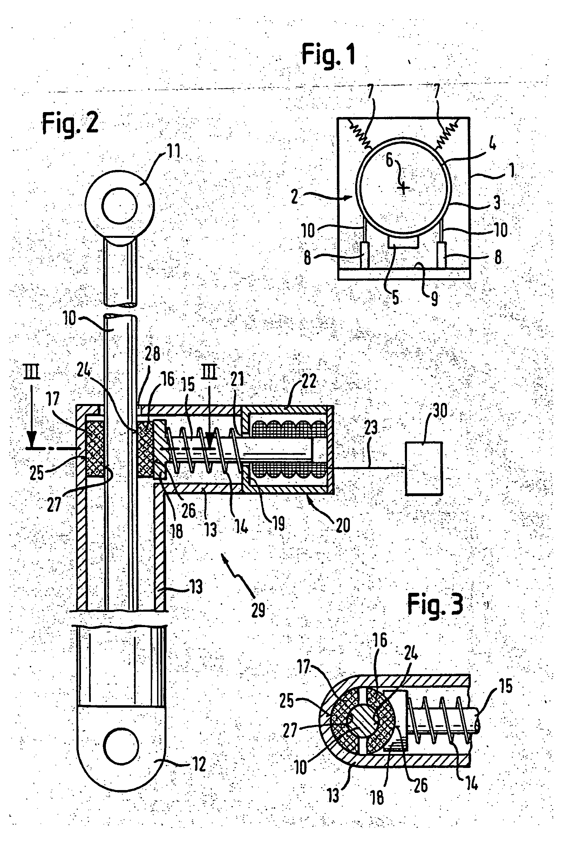

Gemäß Figur 1 umfasst das in einem Gehäuse 1 angeordnete Waschaggregat 2 einer bekannten Waschmaschine im Wesentlichen einen Laugenbehälter 3, eine Wäschetrommel 4 und einen am Laugenbehälter 3 angeordneten Antrieb 5, der die Wäschetrommel 3 um eine horizontale Achse 6 in Drehung versetzt. Das Waschaggregat 2 kann mit der Hilfe von schematisch dargestellten Zugfedern 7 vorzugsweise direkt an einem oberen Rahmen des Gehäuses 1 aufgehängt sein. Um die beim Waschen und Schleudern des in der Wäschetrommel 4 befindlichen Waschgutes auftretenden Schwingungen zu dämpfen, können am Laugenbehälter 3 Dämpfer 8 vorgesehen sein, die sich einerseits am Waschaggregat 2 und andererseits an einem unteren Rahmenteil 9 des Gehäuses 1 abstützen. Die Kolbenstangen der Dämpfer 8 sind mit 10 bezeichnet.

Zum selektiven Unwuchtausgleich, der insbesondere in einem Drehzahlbereich von etwa 0 bis 300 U/min erforderlich ist, weil darin der Resonanzbereich für den Schleuderhochlauf liegt, sieht die vorliegende Erfindung eine Reibungsdämpfereinrichtung 29 vor, deren Dämpferkraft sich elektrisch schalten bzw. steuern lässt. Da oberhalb des zuvor genannten Drehzahlbereiches die Dämpferkräfte das Schwingverhalten des Waschaggregates 2 stören würden, kann die Dämpferkraft der vorliegenden Reibungsdämpfereinrichtung 29 oberhalb dieses Bereiches völlig wirkungslos geschaltet oder verringert werden, so dass das Schwing- und Vibrationsverhalten der gesamten Waschmaschine wesentlich besser und das erzeugte Geräusch in diesem oberen Drehzahlbereich kleiner werden. Wenn der obere Drehzahlbereich nach dem Schleudern wieder verlassen wird, kann die Dämpferkraft der vorliegenden Reibungsdämpfereinrichtung 29 wieder zugeschaltet werden. Da die vorliegende Reibungsdämpfereinrichtung 29 gegen die Kraft einer Druckfeder 14 elektrisch geschaltet bzw. gesteuert wird, wie dies nachfolgend näher erläutert wird, ist es möglich, dass die Reibungsdämpfereinrichtung 29 bei einem plötzlichen Stromausfall, beispielsweise bei einem versehentlichen Abschalten der Waschmaschine, sofort und automatisch wieder ihre dämpfende Kraft entfaltet, so dass ein sicheres Durchlaufen des unteren Drehzahlbereiches bis zum Stillstand gewährleistet ist.

Die Figur 2 zeigt eine bevorzugte Ausführungsform der vorliegenden Reibungsdämpfereinrichtung 29. Diese umfasst im Wesentlichen in an sich bekannter Weise ein Kolbenstange 10 eines Dämpfers 8, der mit seinem oberen Ende 11 am Waschaggregat 2 und mit seinem unteren Ende 12 an einem unteren Rahmenteil 9 des Gehäuses 1 der Waschmaschine angelenkt ist. In einem die Kolbenstange 10 zumindest teilweise umgebenden zylindrischen Gehäuseteil 13 befindet sich ein zweckmäßigerweise quer zur Kolbenstange 10 verlaufender Stößel 15, der vorzugsweise an seiner der Kolbenstange 10 zugewandten Seite ein vorzugsweise tellerartig ausgebildetes Ansatzteil 18 aufweist, an dem ein Reibbelag 16 befestigt ist. Zwischen dem Ansatzteil 18 und einem Anschlagteil 19 befindet sich an der der Kolbenstange 10 abgewandten Seite des Ansatzteiles 18 ein Energiespeicher, der vorzugsweise die Form einer den Stößel 15 umgebenden schraubenförmigen Druckfeder 14 besitzt, die sich einerseits am Ansatzteil 18 und andererseits am Anschlagteil 19 derart abstützt, dass sie das Ansatzteil 18 mit dem Reibbelag 16 gegen der Kolbenstange 10 drückt.

Gemäß Figur 3 ist der Reibbelag 16 vorzugsweise kreisringförmig ausgebildet, derart, dass er mit seiner Reibfläche 24 teilweise an der Umfangsfläche der kreiszylinderförmigen Kolbenstange 10 zweckmäßigerweise ganzflächig anliegt, wenn die Druckfeder 15 ihre Wirkung entfaltet. Der Reibbelag 16 ist vorzugsweise in einer kreisförmigen Vertiefung 26 des Ansatzteiles 18 befestigt, zweckmäßigerweise verklebt. Vorzugsweise ist der Reibbelag 16 so ausgestaltet, dass er etwa an der Hälfte der Umfangsfläche der Kolbenstange 10 angreifen kann.

An der dem Reibbelag 16 gegenüberliegenden Seite der Kolbenstange 10 befindet sich ein weiterer Reibbelag 17, der vorzugsweise ebenfalls kreisringförmig ausgebildet ist, derart, dass er mit seiner Reibfläche 27 teilweise an der Umfangsfläche der Kolbenstange 10 zweckmäßigerweise ganzflächig anliegt, wobei seine der Kolbenstange 10 abgewandte Seite vorzugsweise an einer ebenfalls kreisförmig verlaufenden Innenwandung 25 des Gehäuseteiles 13 befestigt, insbesondere verklebt ist.

In der aus der Figur 2 ersichtlichen Weise ist der Stößel 15 durch einen elektromagnetischen Aktor 20 gegen die Kraft der Druckfeder 15 derart betätigbar, dass das Ansatzteil 18 mit dem Reibbelag 16 bei einer Erregung des Aktors 20 von der Kolbenstange 10 wegbewegt wird, so dass die Kolbenstange 10 frei schwingen kann. Der elektromagnetische Aktor 20 befindet sich in einem Gehäuseteil 22, das vorzugsweise eine das Anschlagteil 19 bildende Stirnseite aufweist, die eine Öffnung 21 besitzt, durch die der Stößel 15 hindurchverläuft, wobei das Gehäuseteil 22 am Gehäuseteil 13 befestigt ist. Die der Stromversorgung des Aktors 20 dienende elektrischen Leitung ist schematisch dargestellt und mit 23 bezeichnet.

Die soweit beschriebene Reibungsdämpfereinrichtung 29 funktioniert in der folgenden Weise. Im unteren Drehzahlbereich von etwa 0 bis 300 U/min der Wäschetrommel 4 ist der Aktor 20 entregt, so dass die Druckfeder 15 ihre volle Wirkung entfaltet und den Reibbelag 16 gegen die Kolbenstange 10 presst, so dass diese zwischen den Reibbelägen 16 und 17 reibschlüssig und dämpfend gehalten wird und eine Schwingungen des Waschaggregates 2 dämpfende Wirkung entfaltet wird.

Wenn in einem höheren Drehzahlbereich, d.h. also im Schleuderbereich, keine Dämpfungswirkung bewirkt werden soll, wird der elektromagnetische Aktor 20 erregt, so dass der Reibbelag 16 durch eine Bewegung des Stößels 15 gegen die Kraft der Druckfeder 14 von der Kolbenstange 10 weggezogen wird. Eine Dämpfung der Kolbenstange 10 erfolgt dann nicht. Sobald der elektromagnetische Aktor 20 entregt wird, wird der Stößel 15 freigegeben und die Druckfeder 15 presst den Reibbelag 16 wieder gegen die Kolbenstange 10.

Es wird darauf hingewiesen, dass an der Stelle des zuvor erläuterten elektromagnetischen Aktors 20, der bei seiner Erregung eine den Stößel 15 "ziehende" Kraft erzeugt, auch andere "ziehende" oder "drückende" elektromagnetische Aktoren mit zugeordneten Druck- oder Zugfedern verwendet werden können, sofern sie in der voranstehend erläuterten Weise funktionieren.

An der Stelle des erläuterten Aus- und Einschaltens des Aktors 20, wobei die Zustände "Dämpfung der Kolbenstange" oder "Nichtdämpfung der Kolbenstange" erreicht werden, ist es auch denkbar, den elektromagnetischen Aktor 20 durch eine Steuereinheit 30 so anzusteuern, dass die Druckkraft der Druckfeder 14 durch eine vorbestimmte Bewegung des Stößels 15 in einem gewünschten Maße aufgehoben wird, um eine gewünschte größere oder kleinere Dämpfungskraft an der Kolbenstange 10 zu erreichen. Anders ausgedrückt, kann durch das gezielte Ansteuern des elektromagnetischen Aktors 20 durch die Steuereinheit 30 in Abhängigkeit von der jeweiligen Drehzahl der Wäschetrommel 2 ein vorgegebenes Dämpfungsprofil eingestellt werden.

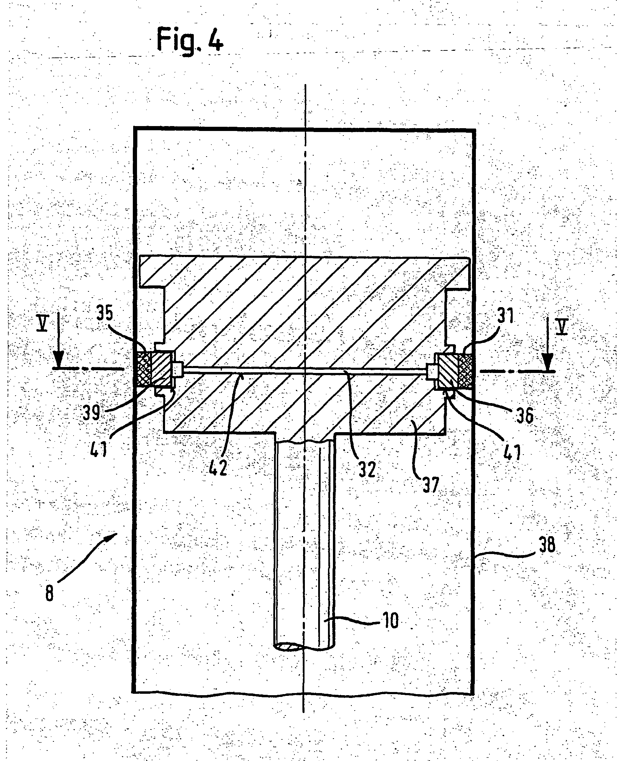

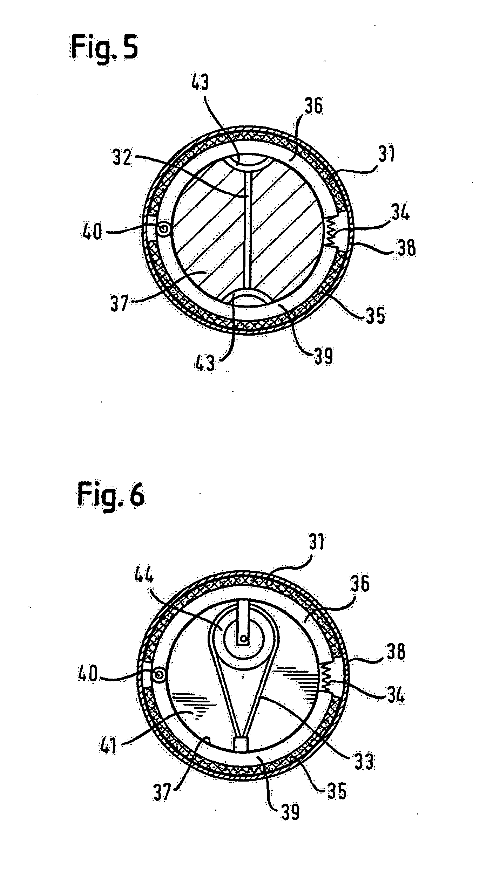

Im folgenden wird im Zusammenhang mit Fig. 4 und 5 eine weitere Ausführungsform der vorliegenden Reibungsdämpfereinrichtung erläutert, bei der der Reibbelag 31 am Umfang eines in einem Zylinder 38 des Dämpfers 8 angeordneten und mit der Kolbenstange 10 verbundenen Kolbens 37 angeordnet und durch einen Energiespeicher gegen die Innenwandung des Zylinders 38 vorgespannt ist. Ein Aktor kann einen Reibbelag 31 bei seiner Aktivierung gegen die Vorspannung des Energiespeichers von der Innenwandung des Zylinders 38 weg bewegen.

Der Aktor ist vorzugsweise ein am Kolben 37 angeordnetes Memory-Metallteil 32, das bei seiner Anregung eine Kraft erzeugt, die den durch den Energiespeicher gegen die Innenwandung des Zylinders 38 vorgespannten Reibbelag 31 von der Innenwandung weg bewegt bzw. weg zieht. Die dämpfende Wirkung des Dämpfers 8 wird dabei aufgehoben. Der Reibbelag 31 ist zweckmäßigerweise auf einem Trägerteil 36 befestigt, insbesondere verklebt.

Die Erregung des Memory-Metallteils kann auf unterschiedliche Weise geschehen. Vorzugsweise kann dazu die Einbringung thermischer Energie vorgesehen sein.

Besonders bevorzugt ist am Kolben 37 ein weiterer Reibbelag 35 auf einem weiteren Trägerteil 39 befestigt, vorzugsweise verklebt, das um einen Drehpunkt 40 verdrehbar mit dem Trägerteil 36 verbunden ist. Das Trägerteil 36 und das weitere Trägerteil 39 verlaufen zumindest teilweise um den Umfang des Kolbens 37 herum und greifen an ihrer dem Kolben 37 jeweils zugewandeten Seite in eine Umfangsnut 41 (Fig. 4) desselben ein. Das Memory-Metallteil 32 ist stabförmig ausgebildet und verläuft durch eine quer durch den Kolben 37 führende Durchgangsöffnung 42. Es ist mit seinem einen Ende an dem Trägerteil 36 und mit seinem anderen Ende an dem weiteren Trägerteil 39 befestigt. Die Befestigung erfolgt vorzugsweise über Halteteile 43, die eine besonders günstige und großflächige Krafteinleitung in das jeweilige Trägerteil 36 bzw. 39 ermöglichen. Die dem Drehpunkt 40 abgewandten Endbereiche des Trägerteiles 36 und des weiteren Trägerteiles 39 sind durch eine den Energiespeicher bildende Rückstellfeder 34 miteinander verbunden. Die Rückstellfeder 34 drückt die genannten Endbereiche so zur Innenwandung des Zylinders 38 auseinander, dass der Reibbelag 31 und der weitere Reibbelag 35 an der Innenwandung des Zylinders 38 anliegen. Besonders bevorzugt wird das stabförmige Memory-Metallteil 32 durch einen Metalldraht gebildet.

Fig. 6 zeigt eine weitere Ausführungsform dieser Reibungsdämpfereinrichtung. Einzelheiten der Fig. 6, die bereits im Zusammenhang mit Fig. 4 und 5 erläutert wurden, sind in der entsprechenden Weise bezeichnet. Der Aktor ist in diesem Fall ein Memory-Draht 33, der zu einer Schlaufe geformt ist und bei seiner Erregung den Umfang der Schlaufe verkleinert. Die Schlaufe verläuft um eine in einem Hohlraum 41 des Kolbens 37 angeordnete und an dem Trägerteil 36 befestigte Rolle 40. Die Schlaufe ist an der der Rolle 44 gegenüberliegenden Seite an dem weiteren Trägerteil 39 befestigt und die dem Drehpunkt 40 abgewandten- Endbereiche des Trägerteiles 36 und des weiteren Trägerteiles 39 werden durch die Rückstellfeder 34 auseinandergespreizt. Auf diese Weise wird erreicht, dass die Kraft der Rückstellfeder 34 die Trägerteile 36 und 39 mit den Reibbelägen 31 bzw. 35 gegen die Innenwandung des Zylinders 38 vorspannt und dass die Reibbeläge 31 und 35 bei Erregung des Memory-Teiles 32 von der Innenwandung weg gezogen werden.

### Bezugszeichenliste

- 1: Gehäuse
- 2: Waschaggregat
- 3: Laugenbehälter
- 4: Wäschetrommel
- 5: Antrieb
- 6: Achse
- 7: Zugfeder
- 8: Dämpfer
- 9: Rahmenteil
- 10: Kolbenstange
- 11: oberes Ende
- 12: unteres Ende
- 13: weiteres Gehäuseteil
- 14: Druckfeder
- 15: Stößel
- 16: Reibbelag
- 17: weiterer Reibbelag
- 18: Ansatzteil
- 19: Anschlagteil
- 20: elektromagnetischer Aktor
- 21: Öffnung
- 22: Gehäuseteil
- 23: Leitung
- 24: Reibfläche
- 25: Innenwandung
- 26: Vertiefung
- 27: weitere Reibfläche
- 28: Öffnung
- 29: Reibungsdämpfereinrichtung
- 30: Steuereinheit
- 31: Reibbelag
- 32: Memory-Metallteil
- 33: Memory-Draht
- 34: Rückstellfeder
- 35: Reibbelag
- 36: Trägerteil
- 37: Kolben
- 38: Zylinder
- 39: Trägerteil
- 40: Drehpunkt
- 41: Umfangsnut
- 42: Durchgangsöffnung
- 43: Halteteil
- 44: Rolle

## Patentansprüche

1. Reibungsdämpfereinrichtung für eine Waschmaschine, in deren Gehäuse (1) ein Waschaggregat (2) mit einem Laugenbehälter (3), einer in dem Laugenbehälter drehbar gelagerten Wäschetrommel (4) und einem Antrieb (5) für die Wäschetrommel angeordnet ist, wobei das Waschaggregat (2) durch wenigstens einen, eine Kolbenstange (10) aufweisenden Dämpfer (8) federnd gegen ein unteres Rahmenteil (9) des Gehäuses abgestützt ist, **dadurch gekennzeichnet, dass** wenigstens ein direkt auf die Kolbenstange (10) des Dämpfers (8) einwirkender Reibbelag (16, 31, 35) vorgesehen ist, der gegen die Kolbenstange (10) durch einen Energiespeicher (14) vorgespannt und von der Kolbenstange (10) durch Aktivieren eines Aktors (20) wegbewegbar ist.

2. Reibungsdämpfereinrichtung nach Anspruch 1, **dadurch gekennzeichnet, dass** ein in Richtung auf die Kolbenstange (10) des Dämpfers (8) verlaufender Stößel (15) vorgesehen ist, der an seiner der Kolbenstange (10) zugewandten Seite einen Reibbelag (16) aufweist, der durch einen Energiespeicher gegen die Kolbenstange (10) vorgespannt ist, und dass der Stößel (15) bei Erregung eines elektromagnetischen Aktors (20) derart bewegbar ist, dass der Reibbelag (16) von der Kolbenstange (10) wegbewegt wird.

3. Reibungsdämpfereinrichtung nach Anspruch 2, **dadurch gekennzeichnet, dass** der Reibbelag (16) an einem Ansatzteil (18) befestigt ist, das an der der Kolbenstange (10) zugewandten Seite des Stößels (15) angeordnet ist.

4. Reibungsdämpfereinrichtung nach Anspruch 2 oder 3, **dadurch gekennzeichnet, dass** der Stößel (15) senkrecht zur Längsachse der Kolbenstange (10) verläuft.

5. Reibungsdämpfereinrichtung nach einem der Ansprüche 2 bis 4, **dadurch gekennzeichnet, dass** der Energiespeicher eine Druckfeder (14) ist.

6. Reibungsdämpfereinrichtung nach einem der Ansprüche 2 bis 4, **dadurch gekennzeichnet, dass** der Energiespeicher eine Druckfeder (14) in der Form einer einen Teilbereich des Stößels (15) umgebenden Schraubenfeder ist, deren eines Ende am Ansatzteil (18) und deren anderes Ende an einem Anschlagteil (19) anliegen, dass der dem Ansatzteil (18) abgewandte Bereich des Stößels (15) durch eine Öffnung (21) des Anschlagteiles (19) geführt und von einem Elektromagneten des Aktors (20) zur Bewegung des Stößels (15) anziehbar ist.

7. Reibungsdämpfereinrichtung nach Anspruch 6, **dadurch gekennzeichnet, dass** der Aktor (20) in einem Gehäuseteil (22) angeordnet ist, dessen der Kolbenstange (10) zugewandte Stirnseite das Anschlagteil (22) bildet.

8. Reibungsdämpfereinrichtung nach Anspruch 7, **dadurch gekennzeichnet, dass** das Gehäuseteil (22) an einem quer zur Kolbenstange (10) verlaufenden Bereich eines weiteren Gehäuseteiles (13) befestigt ist, der das Ansatzteil (18) mit dem Reibbelag (16) sowie die Druckfeder (14) und einen Teilbereich des Stößels (15) umgibt, und dass ein weiterer Bereich des weiteren Gehäuseteiles (13) in der Richtung der Längserstreckung der Kolbenstange (10) verläuft, diese umgibt und mit dem quer zur Kolbenstange (10) verlaufenden Bereich des Gehäuses (13) verbunden ist, wobei die Kolbenstange (10) durch eine Öffnung (28) des weiteren Bereiches des weiteren Gehäuseteiles (13) nach außen geführt ist.

9. Reibungsdämpfereinrichtung nach einem der Ansprüche 2 bis 8, **dadurch gekennzeichnet, dass** an der dem Reibbelag (16) gegenüberliegenden Seite der Kolbenstange (10) ein weiterer Reibbelag (17) ortsfest so angeordnet ist, dass die Kolbenstange (10) zwischen dem Reibbelag (16) und dem weiteren Reibbelag (17) bei entregtem Aktor (20) durch die Kraft der Druckfeder (15) dämpfend gehalten ist.

10. Reibungsdämpfereinrichtung nach einem der Ansprüche 2 bis 9, **dadurch gekennzeichnet, dass** der Reibbelag (16) an seiner der Kolbenstange (10) zugewandten Seite eine kreisringförmige Reibfläche (24) besitzt, die an einem Teilbereich der Umfangsfläche der Kolbenstange (10) anliegen kann.

11. Reibungsdämpfereinrichtung nach Anspruch 9 oder 10, **dadurch gekennzeichnet, dass** der weitere Reibbelag (17) an seiner der Kolbenstange (10) zugewandten Seite eine weitere kreisringförmige Reibfläche (27) besitzt, die an einem Teilbereich der Umfangsfläche der Kolbenstange (10) anliegen kann.

12. Reibungsdämpfereinrichtung nach Anspruch 11, **dadurch gekennzeichnet, dass** der weitere Reibbelag (17) an seiner der Kolbenstange (10) abgewandten Seite an einer kreisförmig verlaufenden Innenwandung (25) des weiteren Gehäuseteiles (13) befestigt ist.

13. Reibungsdämpfereinrichtung nach einem der Ansprüche 2 bis 12, **dadurch gekennzeichnet, dass** der elektromagnetische Aktor (2) den Stößel (15) so betätigt, dass bei der Erregung des Aktors (20) der Reibbelag (16) die Kolbenstange (10) freigibt und dass bei Entregung des Aktors (20) der Reibbelag (16) gegen die Kolbenstange (10) gepresst wird.

14. Reibungsdämpfereinrichtung nach einem der Ansprüche 2 bis 13, **dadurch gekennzeichnet, dass** eine Steuereinheit (30) vorgesehen ist, durch die der elektromagnetische Aktor (20) so erregbar ist, dass die von dem Energiespeicher über den Reibbelag (16) auf die Kolbenstange (10) ausgeübte Druckkraft entsprechend einem vorgegebenen Dämpfungsprofil kompensiert wird.

15. Reibungsdämpfereinrichtung nach Anspruch 1, **dadurch gekennzeichnet, dass** der Reibbelag (31) an einem Trägerteil (36) befestigt ist, das am Umfang eines in einem Zylinder (38) des Dämpfers (8) angeordneten und mit der Kobenstange (10) verbundenen Kolbens (37) angeordnet und durch den Energiespeicher gegen die Innenwandung des Zylinders (38) vorgespannt ist, und dass der Aktor bei seiner Aktivierung das Trägerteil (36) und den Reibbelag (31) gegen die Vorspannung des Energiespeichers von der Innenwandung des Zylinders (38) weg bewegt.

16. Reibungsdämpfereinrichtung nach Anspruch 15, **dadurch gekennzeichnet, dass** der Aktor ein am Kolben (37) angeordnetes Memory-Metallteil (32) ist, das bei seiner magnetischen Anregung die den Reibbelag (31) von der Innenwandung weg bewegende Kraft erzeugt.

17. Reibungsdämpfereinrichtung nach Anspruch 15 oder 16, **dadurch gekennzeichnet, dass** der Energiespeicher eine das Trägerteil (36) und den Reibbelag (31) zur Innenwandung des Zylinders (38) vorspannende Rückstellfeder (34) ist.

18. Reibungsdämpfereinrichtung nach einem der Ansprüche 15 bis 17, **dadurch gekennzeichnet, dass** ein weiterer Reibbelag (35) vorgesehen ist, der um einen Drehpunkt (40) verdrehbar mit dem Reibbelag (31) verbunden ist, dass der Reibbelag (31) und der weitere Reibbelag (35) zumindest teilweise um den Umfang des Kolbens (37) verlaufen und an ihrer dem Kolben zugewandeten Seite in eine Umfangsnut (41) desselben eingreifen, dass das Memory-Metallteil (32) auf das Trägerteil (36) und das weitere Trägerteil (39) einwirkt, und dass die dem Drehpunkt (40) abgewandten Endbereiche des Trägerteiles (36) und des weiteren Trägerteiles (39) durch die Rückstellfeder (34) auseinander gespreizt werden.

19. Reibungsdämpfereinrichtung nach Anspruch 18, **dadurch gekennzeichnet, dass** das Memory-Metallteil (32) ein durch eine quer durch den Kolben (37) verlaufende Durchgangsöffnung (42) verlaufendes stabförmiges Teil ist, das mit einem Ende an dem Trägerteil (36) und mit dem anderen Ende an dem weiteren Trägerteil (39) befestigt ist.

20. Reibungsdämpfereinrichtung nach Anspruch 19, **dadurch gekennzeichnet, dass** das Memory-Metallteil (32) durch einen Metalldraht gebildet ist.

21. Reibungsdämpfereinrichtung nach Anspruch 18, **dadurch gekennzeichnet, dass** das Memory-Metallteil die Form eines Memory-Drahtes (33) besitzt, der zu einer Schlaufe geformt ist und bei seiner Erregung den Umfang der Schlaufe verkleinert und dass die Schlaufe um eine in dem Kolben (37) angeordnete und an dem Trägerteil (36) befestigte Rolle (44) verläuft und an der der Rolle (44) gegenüberliegenden Seite an dem weiteren Trägerteil (39) befestigt ist.

## Claims

1. Friction damper device for a washing machine, in the housing (1) of which a washing unit (2) with a solution container (3), a laundry drum (4) rotatably mounted in the solution container and a drive (5) for the laundry drum is arranged, wherein the washing unit (2) is resiliently supported relative to a lower frame part (9) of the housing by at least one damper (8) having a piston rod (10), **characterised in that** at least one friction lining (16, 31, 35) is provided, which acts directly on the piston rod (10) of the damper (8) and which is biased relative to the piston rod (10) by an energy store (14) and is movable away from the piston rod (10) by activation of an actuator (20).

2. Friction damper device according to claim 1, **characterised in that** a plunger (15) extending in the direction of the piston rod (10) of the damper (8) is provided and has at its end facing the piston rod (10) a friction lining (6) which is biased by an energy store relative to the piston rod (10) and that the plunger (15) on excitation of an electromagnetic actuator (20) is so movable that the friction lining (16) is moved away from the piston rod (10).

3. Friction damper device according to claim 2, **characterised in that** the friction lining (16) is fastened to an attachment part (18) which is arranged at the end of the plunger (15) facing the piston rod (10).

4. Friction damper device according to claim 2 or 3, **characterised in that** the plunger (15) extends perpendicularly to the longitudinal axis of the piston rod (10).

5. Friction damper device according to any one of claims 2 to 4, **characterised in that** the energy store is a compression spring (14).

6. Friction damper device according to any one of claims 2 to 4, **characterised in that** the energy store is a compression spring (14) in the form of a helical spring, which surrounds a sub-region of the plunger (15) and one end of which bears against the projection part (18) and the other end against an abutment part (19) and that the region of the plunger (15) remote from the attachment part (18) is led through an opening (21) of the abutment part (19) and can be attracted by an electromagnet of the actuator (20) for movement of the plunger (15).

7. Friction damper device according to claim 6, **characterised in that** the actuator (20) is arranged in a housing part (22), the end face of which facing the piston rod (10) forms the abutment part (22).

8. Friction damper device according to claim 7, **characterised in that** the housing part (22) is fastened to a region, which extends transversely to the piston rod (10), of a further housing part (13), which surrounds the attachment part (18) with the friction lining (16) as well as the compression spring (14) and a sub-region of the plunger (15), and that a further region of the further housing part (13) extends in the direction of the longitudinal extent of the piston rod (10), surrounds this and is connected with the region of the housing (13) extending transversely to the piston rod (10), wherein the piston rod (10) is led outwardly through an opening (28) of the further region of the further housing part (13).

9. Friction damper device according to any one of claims 2 to 8, **characterised in that** a further friction lining (17) is so arranged in stationary position at the end of the piston rod (10) opposite the friction lining (16) that the piston rod (10) is retained by the force of the compression spring (15) under damping between the friction lining (16) and the further friction lining (17) when the actuator (20) is not excited.

10. Friction damper device according to any one of claims 2 to 9, **characterised in that** the friction lining (16) has at its side facing the piston rod (10) a circularly annular friction surface 924) which can bear against a sub-region of the circumferential surface of the piston rod (10).

11. Friction damper device according to claim 9 or 10, **characterised in that** the further friction lining (17) has at its side facing the piston rod (10) a further circularly annular friction surface (27) which can bear against a sub-region of the circumferential surface of the piston rod (10).

12. Friction damper device according to claim 11, **characterised in that** the further friction lining (17) is fastened at its side remote from the piston rod (10) to a circularly extending inner wall (25) of the further housing part (13).

13. Friction damper device according to any one of claims 2 to 12, **characterised in that** the electromagnetic actuator (2) so actuates the plunger (15) that when the actuator (20) is excited the friction lining (16) frees the piston rod (10) and that when the actuator (20) is not excited the friction ligning (16) is pressed against the piston rod (10).

14. Friction damper device according to any one of claims 2 to 13, **characterised in that** a control unit (30) is provided by which the electromagnetic actuator (20) can be so excited that compensation for the pressure force, which is exerted on the piston rod (10) by the energy store via the friction lining (16), is provided in correspondence with a predetermined damping profile.

15. Friction damper device according to claim 1, **characterised in that** the friction lining (31) is fastened to a carrier part (36) which is arranged at the circumference of a piston (37), which is arranged in a cylinder (38) of the damper (8) and which is connected with the piston rod (10), and is biased by the energy store against the inner wall of the cylinder (38), and that the actuator when it is activated moves the carrier part (36) and the friction lining (31) away from the inner wall of the cylinder (38) against the bias of the energy store.

16. Friction damper device according to claim 15, **characterised in that** the actuator is a memory metal part (32) which is arranged at the piston (37) and which when it is magnetically excited generates the force moving the friction lining (31) away from the inner wall.

17. Friction damper device according to claim 15 or 16, **characterised in that** the energy store is a restoring spring (34) biasing the carrier part (36) and the friction lining (31) towards the inner wall of the cylinder (38).

18. Friction damper device according to any one of claims 15 to 17, **characterised in that** a further friction lining (35) is provided, which is connected with the friction lining (31) to be rotatable about a fulcrum (40), that the friction lining (31) and the further friction lining (31) and the further friction lining (35) extend at least partly around the circumference of the piston (37) and engage at the side thereof, which faces the piston, in a circumferential groove (21) of the same, that the memory-metal part (32) acts on the carrier part (36) and the further carrier part (39) and that the end regions, which are remote from the fulcrum (40), of the carrier part (36) and the further carrier part (39) are spread apart by the restoring spring (34).

19. Friction damper device according to claim 18, **characterised in that** the memory-metal part (32) is a rod-shaped part, which extends through a passage opening (42) extending transversely through the piston (37) and which is fastened by one end to the carrier part (36) and by the other end to the further carrier part (39).

20. Friction damper device according to claim 19, **characterised in that** the memory-metal part (32) is formed by a metal wire.

21. Friction damper device according to claim 18, **characterised in that** the memory-metal part has the shape of a memory wire (33), which is formed into a loop and on excitation thereof reduces the circumference of the loop and that the loop extends around a roller (44), which is arranged in the piston (37) and fastened to the carrier part (36), and which is fastened to the further carrier part (39) at the side opposite the roller (44).

## Revendications

1. Dispositif amortisseur à friction pour un lave-linge, dans le boîtier (1) duquel est disposé un groupe de lavage (2) doté d'un réservoir de liquide de lavage (3), d'un tambour à linge (4) logé de manière rotative dans le réservoir de liquide de lavage et d'un entraînement (5) pour le tambour à linge, le groupe de lavage (2) étant appuyé élastiquement sur une pièce de cadre inférieure (9) du boîtier par au moins un amortisseur (8) présentant une tige de piston (10), **caractérisé en ce qu'**au moins une garniture de friction (16, 31, 35) agissant directement sur la tige de piston (10) de l'amortisseur (8) est ménagée, laquelle est précontrainte contre la tige de piston (10) par un accumulateur d'énergie (14) et est déplaçable en s'éloignant de la tige de piston (10) par activation d'un acteur (20).

2. Dispositif amortisseur à friction selon la revendication 1, **caractérisé en ce qu'**un coulisseau (15) s'étendant en direction de la tige de piston (10) de l'amortisseur (8) est ménagé, lequel, sur son côté tourné vers la tige de piston (10) présente une garniture de friction (16) qui est précontrainte contre la tige de piston (10) par un accumulateur d'énergie, et **en ce que** le coulisseau (15), lorsqu'un acteur électromagnétique (20) est excité, est déplaçable de manière à ce que la garniture de friction (16) soit déplacée en s'éloignant de la tige de piston (10).

3. Dispositif amortisseur à friction selon la revendication 2, **caractérisé en ce que** la garniture de friction (16) est fixée sur une pièce en saillie (18) qui est disposée sur le côté du coulisseau (15) tourné vers la tige de piston (10).

4. Dispositif amortisseur à friction selon la revendication 2 ou 3, **caractérisé en ce que** le coulisseau (15) s'étend perpendiculairement à l'axe longitudinal de la tige de piston (10).

5. Dispositif amortisseur à friction selon l'une quelconque des revendications 2 à 4, **caractérisé en ce que** l'accumulateur d'énergie est un ressort de compression (14).

6. Dispositif amortisseur à friction selon l'une quelconque des revendications 2 à 4, **caractérisé en ce que** l'accumulateur d'énergie est un ressort de compression (14) en forme d'un ressort hélicoïdal entourant une zone partielle du coulisseau (15), dont une extrémité est adjacente à la pièce en saillie (18) et dont l'autre extrémité est adjacente à une pièce de butée (19), **en ce que** la zone du coulisseau (15), détournée de la pièce en saillie (18), est guidée à travers une ouverture (21) de la pièce de butée (19) et peut être attirée par un électroaimant de l'acteur (20) pour déplacer le coulisseau (15).

7. Dispositif amortisseur à friction selon la revendication 6, **caractérisé en ce que** l'acteur (20) est disposé dans une partie de boîtier (22), dont le côté frontal tourné vers la tige de piston (10) forme la pièce de butée (22).

8. Dispositif amortisseur à friction selon la revendication 7, **caractérisé en ce que** la partie de boîtier (22) est fixée sur une zone d'une partie de boîtier supplémentaire (13), s'étendant transversalement à la tige de piston (10), laquelle zone entoure la pièce en saillie (18) avec la garniture de friction (16) ainsi que le ressort de compression (14) et une zone partielle du coulisseau (15), et **en ce qu'**une zone supplémentaire de la partie de boîtier supplémentaire (13) s'étend en direction de l'étendue longitudinale de la tige de piston (10), **en ce qu'**elle entoure celle-ci et est reliée à la zone du boîtier (13) s'étendant transversalement à la tige de piston (10), la tige de piston (10) étant guidée vers l'extérieur à travers une ouverture (28) de la zone supplémentaire de la partie de boîtier supplémentaire (13).

9. Dispositif amortisseur à friction selon l'une quelconque des revendications 2 à 8, **caractérisé en ce que** sur le côté de la tige de piston (10) opposé à la garniture de friction (16), une garniture de friction supplémentaire (17) est disposée de manière stationnaire de façon à ce que la tige de piston (10) soit maintenue de manière amortissante par la force du ressort de compression (15) entre la garniture de friction (16) et la garniture de friction supplémentaire (17) lorsque l'acteur (20) est désexcité.

10. Dispositif amortisseur à friction selon l'une quelconque des revendications 2 à 9, **caractérisé en ce que** la garniture de friction (16), sur son côté tourné vers la tige de piston (10), possède une surface de friction (24) en forme d'anneau circulaire, laquelle peut être adjacente à une zone partielle de la surface circonférentielle de la tige de piston (10).

11. Dispositif amortisseur à friction selon la revendication 9 ou 10, **caractérisé en ce que** la garniture de friction supplémentaire (17), sur son côté tourné vers la tige de piston (10), possède une surface de friction supplémentaire (27) en forme d'anneau circulaire, qui peut être adjacente à une zone partielle de la surface circonférentielle de la tige de piston (10).

12. Dispositif amortisseur à friction selon la revendication 11, **caractérisé en ce que** la garniture de friction supplémentaire (17), sur son côté détourné de la tige de piston (10), est fixée sur une paroi intérieure (25), s'étendant de manière circulaire, de la partie de boîtier supplémentaire (13).

13. Dispositif amortisseur à friction selon l'une quelconque des revendications 2 à 12, **caractérisé en ce que** l'acteur électromagnétique (2) actionne le coulisseau (15) de telle manière que, en cas d'excitation de l'acteur (20), la garniture de friction (16) libère la tige de piston (10) et que, en cas de désexcitation de l'acteur (20), la garniture de friction (16) est pressée contre la tige de piston (10).

14. Dispositif amortisseur à friction selon l'une quelconque des revendications 2 à 13, **caractérisé en ce qu'**une unité de commande (30) est ménagée au moyen de laquelle l'acteur électromagnétique (20) peut être excité de manière à ce que la force de pression exercée sur la tige de piston (10) par l'accumulateur d'énergie par l'intermédiaire de la garniture de friction (16) soit compensée de manière correspondant à un profil d'amortissement prédéfini.

15. Dispositif amortisseur à friction selon la revendication 1, **caractérisé en ce que** la garniture de friction (31) est fixée sur une pièce de support (36) qui est disposée sur la circonférence d'un piston (37) disposé dans un cylindre (38) de l'amortisseur (8) et relié à la tige de piston (10) et est précontrainte contre la paroi intérieure du cylindre (38) par l'accumulateur d'énergie, et **en ce que** l'acteur, lorsqu'il est activé, déplace la pièce de support (36) et la garniture de friction (31) contre la précontrainte de l'accumulateur d'énergie en les éloignant de la paroi intérieure du cylindre (38).

16. Dispositif amortisseur à friction selon la revendication 15, **caractérisé en ce que** l'acteur est une pièce métallique à mémoire (32) disposée sur le piston (37), laquelle pièce, lors de son excitation magnétique, génère la force éloignant la garniture de friction (31) de la paroi intérieure.

17. Dispositif amortisseur à friction selon la revendication 15 ou 16, **caractérisé en ce que** l'accumulateur d'énergie est un ressort de rappel (34) qui précontraint la pièce de support (36) et la garniture de friction (31) vers la paroi intérieure du cylindre (38).

18. Dispositif amortisseur à friction selon l'une quelconque des revendications 15 à 17, **caractérisé en ce qu'**une garniture de friction supplémentaire (35) est ménagée, laquelle est reliée à la garniture de friction (31) de manière rotative autour d'un pôle de rotation (40), **en ce que** la garniture de friction (31) et la garniture de friction supplémentaire (35) s'étendent au moins en partie autour de la circonférence du piston (37) et ont prise, sur leur côté tourné vers le piston, dans une rainure circonférentielle (41) de celui-ci, **en ce que** la pièce métallique à mémoire (32) agit sur la pièce de support (36) et sur la pièce de support supplémentaire (39), et **en ce que** les zones terminales, détournées du pôle de rotation (40), de la pièce de support (36) et de la pièce de support supplémentaire (39) sont écartées par le ressort de rappel (34).

19. Dispositif amortisseur à friction selon la revendication 18, **caractérisé en ce que** la pièce métallique à mémoire (32) est une pièce en forme de barre s'étendant à travers une ouverture de passage (42) s'étendant à travers le piston (37), laquelle pièce est fixée avec une extrémité sur la pièce de support (36) et avec l'autre extrémité sur la pièce de support supplémentaire (39).

20. Dispositif amortisseur à friction selon la revendication 19, **caractérisé en ce que** la pièce métallique à mémoire (32) est formée par un fil métallique.

21. Dispositif amortisseur à friction selon la revendication 18, **caractérisé en ce que** la pièce métallique à mémoire possède la forme d'un fil métallique à mémoire (33) qui est formé en une boucle et qui, lorsqu'il est excité, diminue la circonférence de la boucle, et **en ce que** la boucle s'étend autour d'un galet (44) disposé dans le piston (37) et fixé sur la pièce de support (36) et est fixée, sur le côté opposé au galet (44), sur la pièce de support supplémentaire (39).
